# EUROPEAN PATENT APPLICATION

(11) **EP 4 650 842 A1**
(43) Date of publication of application: **19.11.2025**
(21) Application number: 25172302.9
(22) Date of filing: 24.04.2025
(51) Int. Cl.: G02B 6/44

(54) **A FIBER OPTICAL STORAGE EQUIPMENT**

(30) Priority: 16.05.2024 IT 202400011113; 16.05.2024 IT 202400011119; 10.06.2024 IT 202400013240
(71) Applicant: Prysmian S.p.A., 20126 Milan (IT)
(72) Inventor: Abbiati, Fabio, 20126 Milano (IT)
(74) Representative: Perani & Partners S.p.A.

(57) **Abstract**

A fiber optical storage equipment (1) comprising: a base member (10) comprising a base (11); a support shaft (30) extending along a longitudinal direction (X-X) perpendicular to the base (11) between the base member (10) and an end support portion (31); an optical fiber spool (40) for winding and unwinding an optical cable (2), the optical fiber spool (40) being configured to longitudinally move along the support shaft (30) and to rotate around the support shaft (30), the optical fiber spool (40) being movable along the longitudinal direction (X-X) between a first position, where the optical fiber spool (40) is proximate to the base (11) and a second position, where the optical fiber spool (40) is longitudinally spaced apart from the base (11), the optical fiber spool (40) being free to rotate for winding and unwinding in the second position, a longitudinal locking and rotational arrangement (60) for longitudinally locking the fiber optical spool (40) in the second position at the end support portion (31) and for allowing rotation of the fiber optical spool (40) around the support shaft (30).

## Description

### Field of the invention

The present invention relates to the of equipment and components for the installation of optical cables in optical access networks. In particular, the present invention relates to a fiber optical storage equipment for containing and storing optical fibers that are routed to the fiber optical network users.

### Background of the invention

A FTTR (Fiber to the Room) network refers to the way optical fibers are connected between one or more terminals and a distribution box, which is the basic technology of optical Fiber access in buildings with offices and apartments.

Typically, installation operations of FTTR networks are complex for the correct positioning of the optical cables in the building and relative components and then managed by professionals.

In FTTR applications, a fiber optical storage equipment can be used to regulate the length of the optical cable for a relative connection to a terminal. The typical fiber optical storage equipment involved comprises a spool and relative adapter housing and, in some cases, also a connector housing which are arranged in a relative equipment. The mutual arrangement of the above components in the known fiber optical storage equipment causes problems in cable management, reduces the confront of the users, limits the available space being space consuming. It is to be noted that in the attempt to save space, the fiber optical storage equipment of the state of art provides complex solutions for optical cable, adapter and connector housing, causing undesired bending of the fiber and difficulties in their managing. Furthermore, during installation, inspection and maintenance operations, there are significant risks of fiber damage as well as problems for the operator to correctly operate in the fiber optical storage equipment of the state of art.

EP3367149 discloses an optical fiber storage module having a base, and a wall having an opening for paying out an optical fiber from inside the module. Spool retention fingers extend from the base. One or more fingers have a first rim at a first height above the base, and one or more fingers have a second rim at a second height above the base. A fiber supply spool has a hub and an annular support disk inside the hub which forms a third rim. The spool is movable on the retention fingers between a first position where the third rim of the support disk is captured between the first and the second rims on the retention fingers, thus allowing the spool to turn when fiber is unwound, and a second position where the spool engages one or more bosses formed on the module base to lock the spool from further rotation.

### Summary of the invention

The Applicant has tackled the problem of optimizing the management of the optical cable in a fiber optical storage equipment.

The Applicant has found that providing a fiber optical storage equipment having a base module, a support shaft and fiber optical spool movable with respect to the shaft and a locking and rotational arrangement configured to lock fiber optical spool in the second position spaced apart from the base to allow the rotation of the fiber optical spool, optimizes and improves the fiber management.

Therefore, according to one aspect, the present invention relates to a fiber optical storage equipment comprising fiber optical storage equipment comprising: a base member comprising a base, a support shaft extending along a longitudinal direction perpendicular to the base between the base member and an end support portion, an optical fiber spool for winding and unwinding an optical cable, the optical fiber spool being configured to longitudinally move along the support shaft and to rotate around the support shaft, the optical fiber spool being movable along the longitudinal direction between a first position, where the optical fiber spool is proximate to the base and a second position, where the optical fiber spool is longitudinally spaced apart from the base, the optical fiber spool being free to rotate for winding and unwinding in the second position, wherein the fiber optical storage equipment comprises: a longitudinal locking and rotational arrangement for longitudinally locking the fiber optical spool in the second position at the end support portion and for allowing rotation of the fiber optical spool around the support shaft.

According to one embodiment, the longitudinal locking and rotational arrangement comprises a shaft locking member formed on the support shaft at the end support portion, a spool locking member formed on the fiber optical spool and resiliently deformable to engage and disengage the support shaft and a spool engagement member formed on the spool locking member and configured to engage therebetween the shaft locking member at the second position to lock the fiber optical spool in the second position for rotating the fiber optical spool and to allow disengagement of the fiber optical spool from the support shaft upon application of an external force on the spool locking member.

According to one embodiment, the longitudinal locking and rotational arrangement comprises a deformation frame connected to at least one part of the spool locking member, the deformation frame being configured to inwardly deform the at least one part of the spool locking member for disengagement of the spool engagement member from the shaft locking member upon actuation of the deformation frame by the external force.

According to one embodiment, the optical fiber spool comprises a hub comprising a hollow hub channel extending along the longitudinal direction from a first hub end portion arranged at the base in the first position to an opposite second hub end portion and configured to receive the support shaft and the support shaft comprises a hollow shaft channel.

According to one embodiment, the shaft locking member is formed on the support shaft within the hollow shaft channel, the spool locking member extends into the hub channel and is spaced apart from the hub along a spacing direction perpendicular to the longitudinal direction, the spool locking member defining with the hub an annular gap configured to receive therebetween the support shaft.

According to one embodiment, the spool locking member comprises first and second locking fingers extending along the longitudinal direction between respectively a first and second connection end portions connected to the hub at the second hub end portion and an opposed first and second free retention end portions, the spool engagement member comprises first engagement elements and second engagement elements outwardly projecting respectively from the first and second first locking fingers, the first and second engagement elements being arranged respectively at the first and second distance from the second hub end portion (44b), the first distance being greater than the second distance.

According to one embodiment, the first and the second engagement elements outwardly project respectively at the first and second free retention end portions towards the shaft.

According to one embodiment, the first and second locking fingers are angularly spaced apart in an alternated manner.

According to one embodiment, the first locking fingers are resiliently deformable for allowing disengagement of the first engagement elements from the shaft locking member for removal of the fiber optical spool, the second locking fingers are resilient deformable for allowing the engagement of the shaft locking member between the first and second engagement elements.

According to one embodiment, the shaft locking member comprises a flange, the flange having a locking surface configured to engage the first engagement elements and an opposed support surface configured to engage the second engagement elements.

According to one embodiment, the first and second engagement elements define therebetween a receiving area to engage the shaft locking member to lock the fiber optical spool at the end shaft portion and to allow the relative rotation.

According to one embodiment, the second engagement elements have friction members configured to counteract a rotation of the fiber optical spool engaging the shaft locking member.

According to one embodiment, the deformation frame is arranged in the hub channel and connected to the first locking fingers, the deformation frame being configured to inwardly deform the first locking fingers for disengagement of the first locking elements from the shaft locking member upon actuation of the deformation frame by the external force.

According to one embodiment, the deformation frame comprises a rotating body and connecting arms configured to connect the rotating body to the first locking fingers at the first free retention end portions, the rotating body being configured to rotate around a rotating axis extending along the longitudinal direction upon application of an external force to inwardly deform the first locking fingers.

According to one embodiment, each connecting arm extends between the relative first locking finger and the rotating body along a curved direction.

The present invention further relates to a fiber optical storage equipment assembly comprising a fiber optical storage equipment according to the present invention, an optical adapter arranged in an adapter housing; an optical cable having at one end portion, a connector to be connected to the optical adapter and, at the other end portion, an optical connector to be connected to a termination box.

### Brief description of the drawings

The present invention will now be described in more detail hereinafter with reference to the accompanying drawings, in which exemplary embodiments of the invention are shown:
FIG. 1 is a perspective view of the optical spool according to one embodiment of the invention;
FIG. 2 is a bottom view of the optical spool of FIG. 1;
FIG. 3 is further perspective view of the optical spool of FIG. 1;
FIG. 4 is a top view of the optical spool of FIG. 1;
FIG. 5 is a perspective view of the fiber optical storage equipment assembly with an optical spool in a rotation position according to one embodiment of the invention with some parts removed;
FIG. 6 is a further perspective view of the fiber optical storage equipment assembly with an optical spool in a rotation position according to one embodiment of the invention with some parts removed;

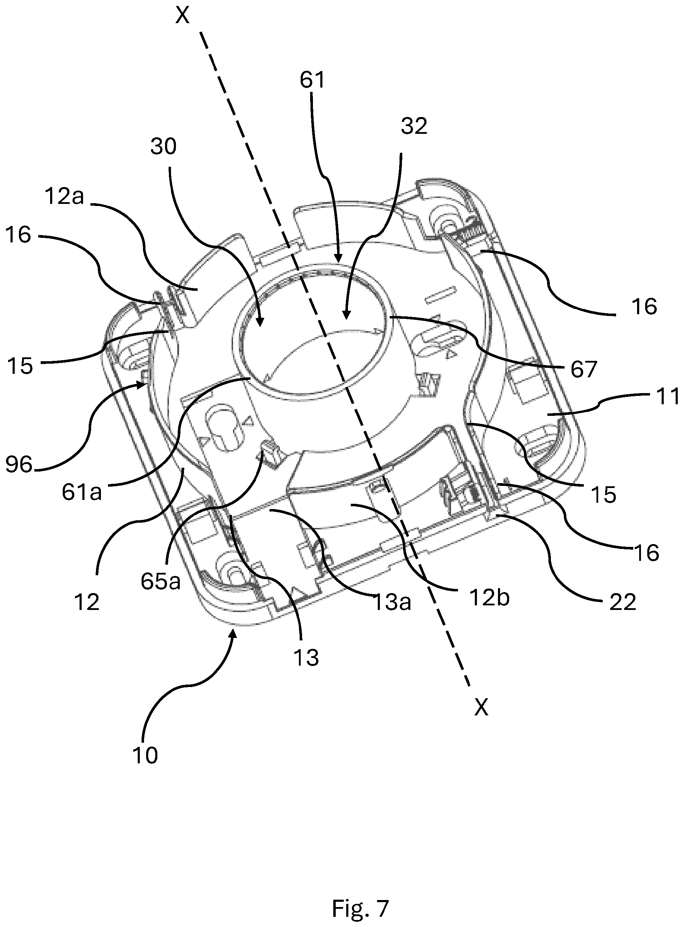

FIG. 7 is a perspective view a base module of the fiber optical storage equipment according to one embodiment of the invention;

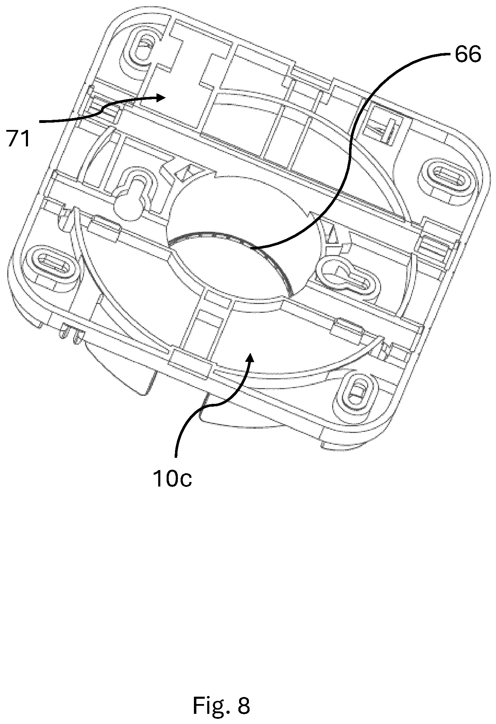

FIG. 8 is a further perspective view a base module of FIG.7;
FIG. 9 is a perspective view of the fiber optical storage equipment assembly with an optical spool in a rest position according to one embodiment of the invention with some parts removed;
FIG. 10 is is a perspective view of the optical spool according to a second embodiment of the invention.

### Detailed description

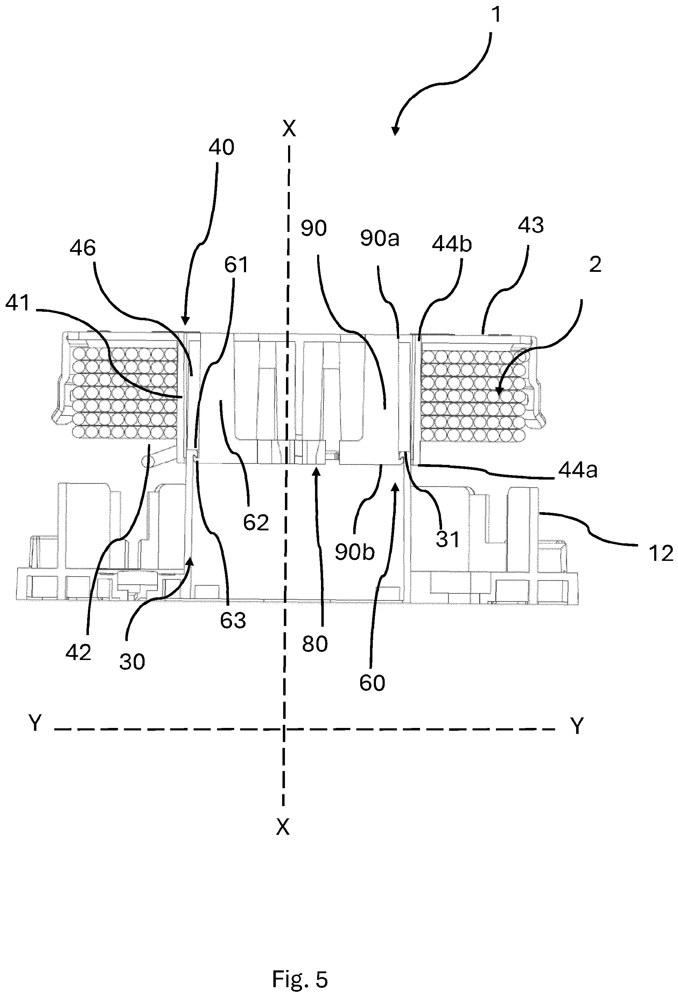

Figures 5, 6 and 9 show a fiber optical storage equipment 1.

The fiber optical storage equipment 1 comprises a base member 10 configured to receive an optical cable 2 to be wound and unwound.

The optical cable 2 extends between end portions and can comprise at one end portion a connector to be connected to an optical adapter 3 and at the other end a connector to be connected to a termination box.

The base member 10 comprises a base 11.

According to one embodiment, the base member 10 further comprises a perimetral wall 12 extending upwardly from the base 11.

According to one embodiment, the fiber optical storage equipment 1 comprises a cover member (not shown in the figures) configured to define with the base member 10 an inner volume. The cover member can comprise a cover ceiling and a cover lateral wall extending from the cover ceiling and defining a cover opening opposed to the cover ceiling. The cover ceiling and the cover lateral wall defines an open housing.

The base member 10 is configured to couple with the cover member at the cover opening.

The cover member is removably associated to base member 10. Namely, the base member 10 is configured to close the open housing.

The base member 10 together with the cover member define a fiber optical storage box.

The base member 10 is configured to receive an optical cable 2 on the base member 10. If defined the inner volume, the base member 10 is configured to receive an optical cable 2 entering in the inner volume and exiting from the inner volume.

The fiber optical storage equipment 1 comprises a support shaft 30 extending along a longitudinal direction X-X perpendicular to the base 11. Namely, the support shaft 30 has a shaft height from the base 11.

According to one embodiment, the support shaft 30 is at least in part surrounded by the perimetral wall 12. Namely, the perimetral wall 12 has wall height wherein the shaft height is greater than wall height.

According to the embodiment with the cover member, the support shaft 30 extends into the inner volume.

According to one embodiment, the support shaft 30 comprises a hollow shaft channel 32.

The fiber optical storage equipment 1 comprises an optical fiber spool 40 for winding and unwinding an optical cable 2. It is to be noted that the optical fiber spool 40 has a spool height that is greater than the wall height (where the wall is present) and lower than shaft height.

The optical fiber spool 40 is configured to longitudinally move along the support shaft 30 and to rotate around the support shaft 30.

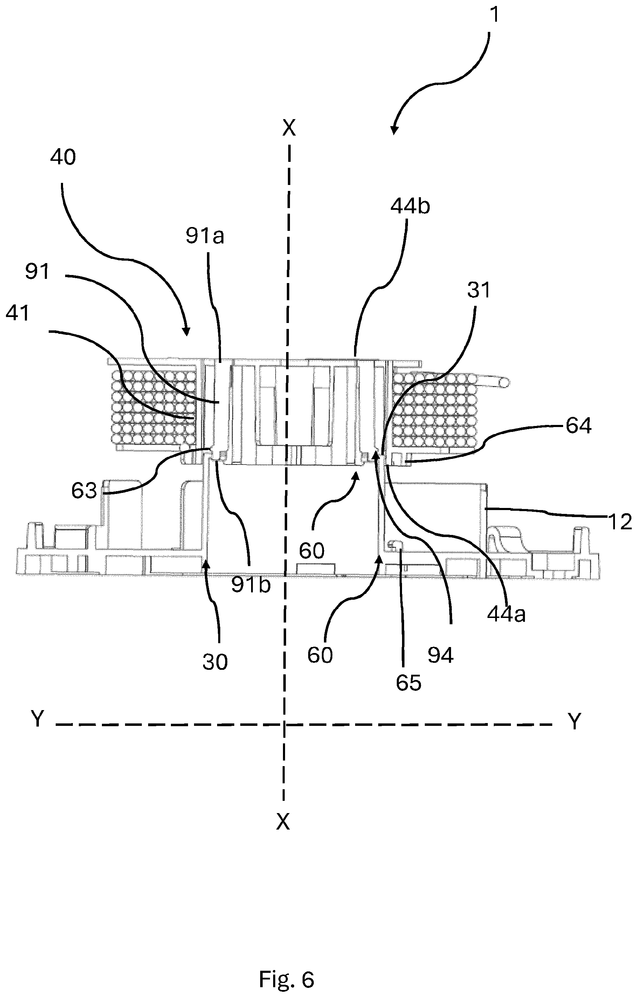

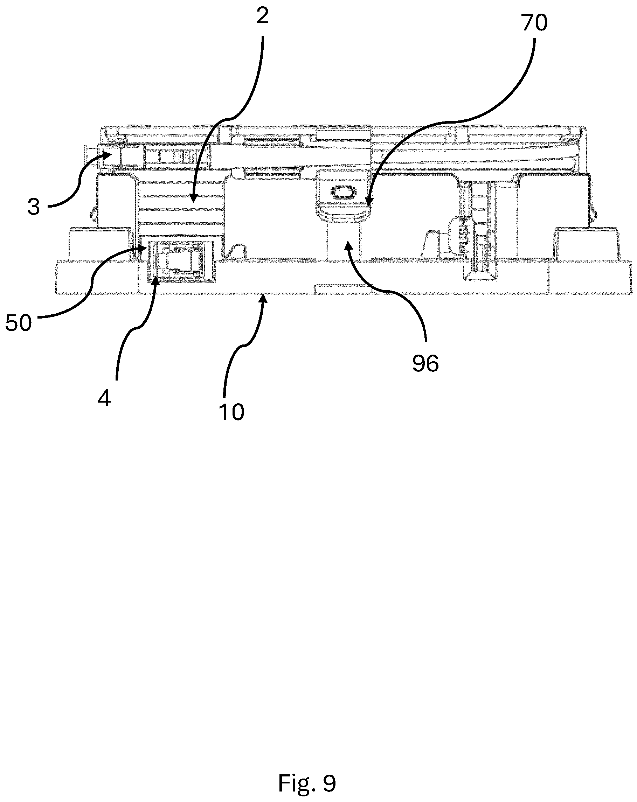

The optical fiber spool 40 is movable along the longitudinal direction X-X between a first position, where the optical fiber spool 40 is proximate to the base 11 as shown in figure 9 and a second position where the optical fiber spool 40 is longitudinally spaced apart from base 11 as shown in figures 5 and 6.

The optical fiber spool 40 is free to rotate for winding and unwinding in the second position.

According to one embodiment, the optical fiber spool 40 is at least in part surrounded by the perimetral wall 12 in the first position, and it is longitudinally spaced apart from the perimetral wall 12 in the second position.

According to one embodiment, the optical fiber spool 40 comprises a hub 41.

According to one embodiment, the optical fiber spool 40 comprises first retaining wings 42 and second retaining wings 43 outwardly projecting from the hub 41. Namely, the first retaining wings 42 and second retaining wings 43 extend between the hub 41 and free wing ends 42a, 43a. The first retaining wings 42 and the second retaining wings 43 are configured to accommodate therebetween an optical cable 2 wound around the hub 41.

The first retaining wings 42 and second retaining wings 43 are mutually spaced apart along the longitudinal direction X-X.

According to one embodiment, the fiber optical storage equipment 1 comprises at least one restraining element 70 configured to restrain the wound optical cable 2. Each restraining element 70 can be hinged to at least one of the first and second retaining wings 42, 43.

Thanks to the restraining elements 70 as appendixes on the wings 42, 43, the restraint and containing of the optical cable is optimized after the installation, without requiring a perimetral wall or a high perimetral wall, thus providing cost and material reduction.

Each restraining element 70 can be hinged to a relative free wing end 42a, 43a. Specifically, each restraining element 70 is configured to engage the base member 10 for restraining the wound optical cable 2.

**In** detail, the restraining element 70 is configured to pivot with respect to the wings 42, 43 around a rotation axis.

The fiber optical storage equipment 1, comprises hinges 70a configured to connect the restraining elements 70 to the relative wing 42, 43. Therefore, the hinges 70a are arranged between the restraining elements 70 and the wings 42, 43.

According to one embodiment, the restraining element 70 extends between a hinge portion and a coupling portion 70b for the coupling with the base member 10. The hinge portion defines the hinge 70a connecting the coupling portion 70b to the wing 42, 43.

According to one embodiment, the hinge 70a has a narrowing thickness with respect to a thickness of wings 42, 43 and the coupling portion 70b. Namely, the hinge 70a is formed one piece with the fiber optical spool 40.

According to one embodiment, the hinge 70a is a living hinge.

According to one embodiment, each restraining element 70 is configured to move between a restraining configuration and a rotation configuration respectively when the fiber optical spool 40 is in the first position and in the second position.

Namely, each restraining element 70 is configured to engage the base member 10 in the restraining configuration and to disengage the base member 10 in the rotation configuration.

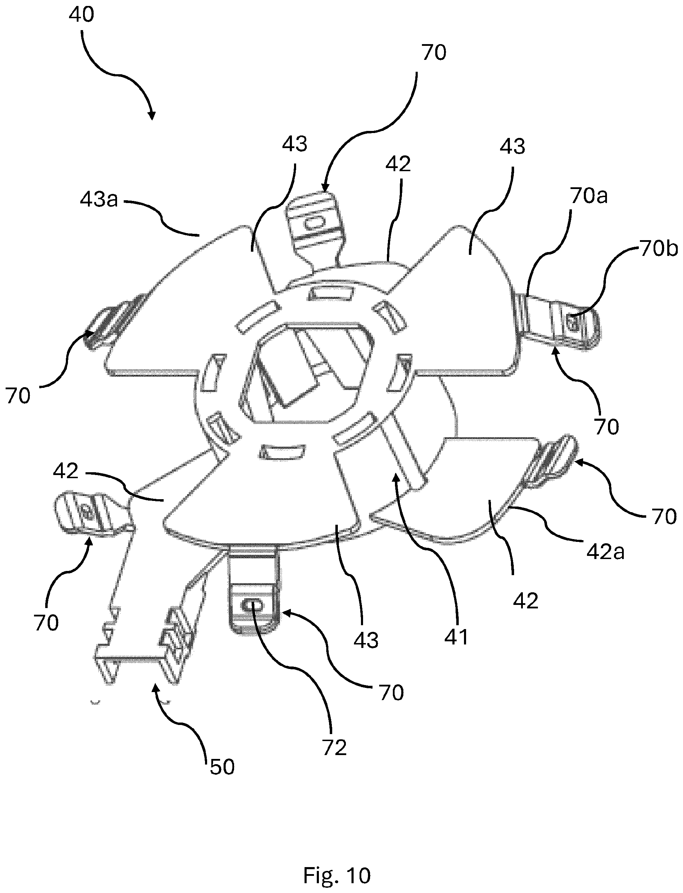

According to one embodiment, each restraining element 70 is formed on a respective second retaining wing 43. Alternatively, each restraining element 70 is formed on a respective first retaining wing 43. Alternatively, restraining elements 70 can be formed on one or more first retaining wings 43 and on one or more second retaining wings 43 as shown in figure 10.

In the following the embodiment wherein each restraining element 70 is formed on a respective second retaining wing 43 is considered, but same technical features can be applied also to the other embodiments.

According to one embodiment alternative and which can be combined with the previous ones, the optical fiber spool 40 comprises an adapter housing 50 for an optical adapter 3. The adapter housing 50 projects towards the base 11 and is proximate to the base 11 in the first position.

According to one embodiment, the base module 10 comprises a seat 14 in the base 11 for the adapter housing 50 configured to receive the adapter housing 50 when the fiber optical spool 40 is in the first position.

Thanks to the adapter housing 50 arrangement, the fiber optical storage equipment 1 makes simpler and more convenient the automatic loading of the optical cable 2 or patch cords (or pigtail, **--** Outer Diameter 0.6-3mm) because the operator can easily reach the adapter housing and then the relative adapter. Moreover, the presence of the adapter on the fiber optical spool 40 simplifies the installation since the connector is already inserted into the adapter and a fixed position for the fiber optical spool is set.

According to one embodiment, the adapter housing 50 is formed on a first retaining wing 42. Namely, the adapter housing 50 projects from the first retaining wing 42 towards the base 11.

The adapter housing 50 is configured to define a retaining volume to receive and retain an adapter. The adapter housing 50 extends between two receiving openings 50a, 50b defined by the first wing 42 and lateral walls 50c projecting from the wing 42. Such lateral walls 50c can comprise adapter seats configured to receive adapter retaining members formed on relative outer surface.

It is to be noted that the lateral walls 50c can be elastically deformable to receive and retain the adapter 50 upon the insertion in the relative seat.

The adapter housing 50 can be formed in one piece with the first wing 42.

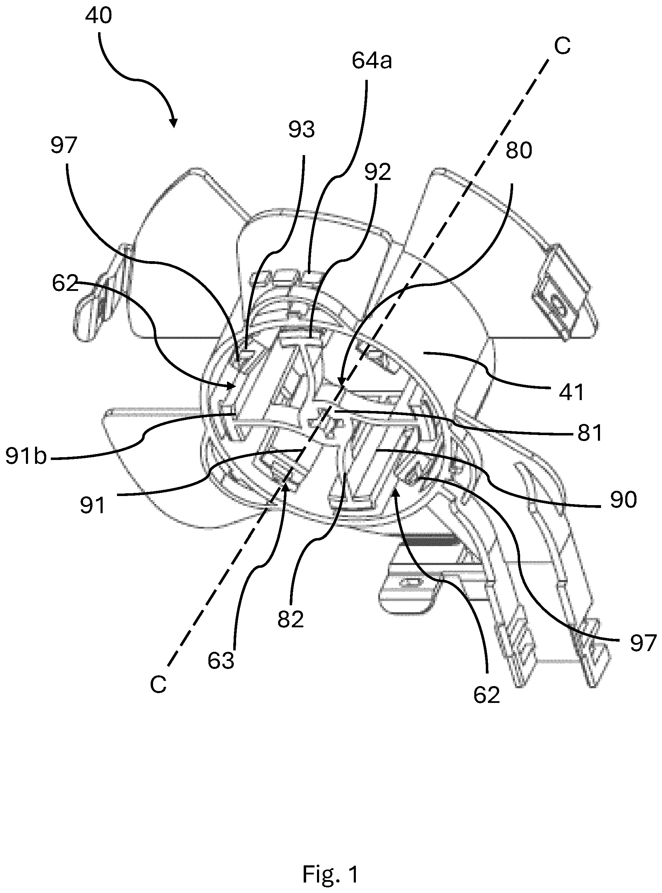

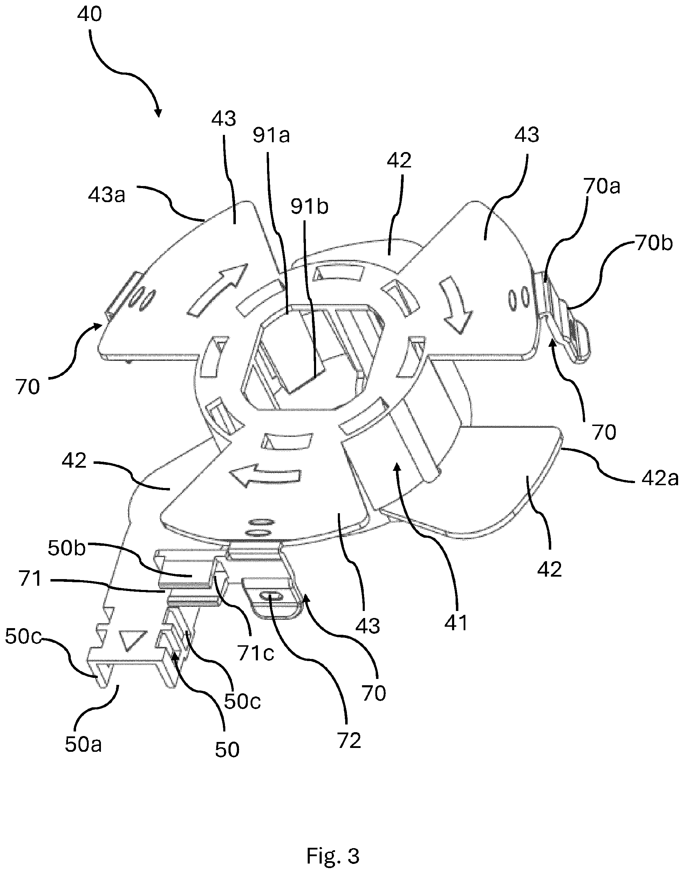

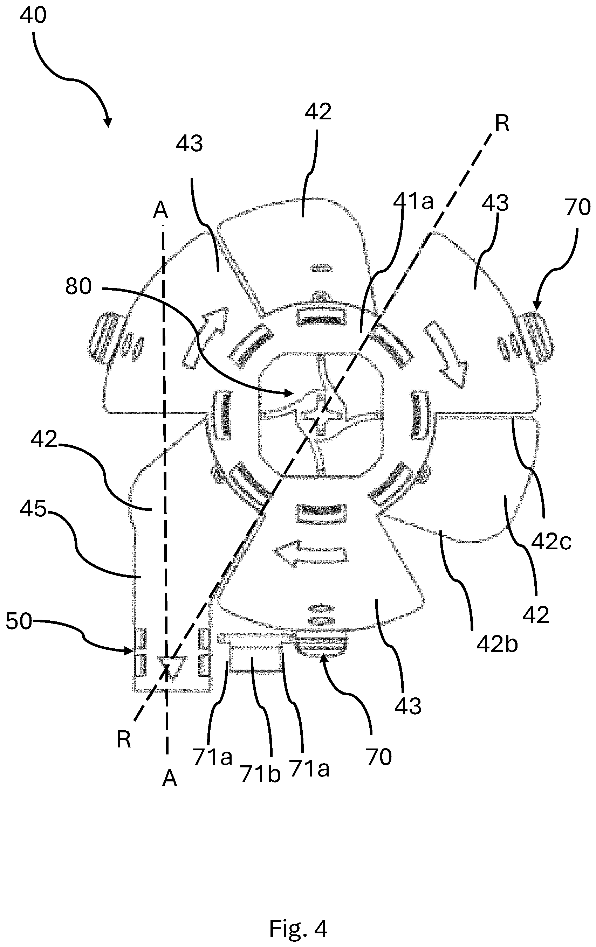

According to one embodiment as shown in figures 1-4 and 10, the second retaining wings 43 are shaped as sector of circular annulus and are angularly spaced apart. The first retaining wings 42 are shaped as truncated sector of circular annulus and are angularly spaced apart. Namely, each first retaining wing 42 has a radial side 42c and a truncation side 42b forming with a radial direction an angle in a range of 30° to 60°, preferably 45°.

Namely, the hub 41 has an inner radius and the retaining wings 42, 43 have an outer radius at the free wing end 42a, 43a wherein the outer radius is greater than the inner radius. The inner and outer radius define relative inner and outer circumference. It is to be noted that the retaining wings 42, 43 extend between the inner and the outer circumferences, within the relative annulus defined between the inner and the outer circumferences.

The first retaining wings 42 are angularly offset with respect to the second retaining wings 43.

Thanks to the shape of the wings, damages during cable winding and unwinding can be avoided.

According to one embodiment, the hub 41 is rotationally and slidingly coupled with the support shaft 30.

According to one embodiment, the hub 41 comprises a hollow hub channel 44 extending along the longitudinal direction X-X from a first hub end portion 44a arranged at the base 11 in the first position to an opposite second hub end portion 44b and configured to receive the support shaft 30.

Namely, the first retaining wings 42 and the second retaining wings 43 extend respectively at the first hub end portion 44a and at the second hub end portion 44b.

According to one embodiment, the base member 10 comprises anti-rotation elements 13 configured to engage at least a retaining portion 45 of a first retaining wing 42 to prevent the rotation of the fiber optical spool 40 when the fiber optical spool 40 is in the first position and to disengage the retaining portion 45 upon the fiber optical spool 40 is moved in the second position. Alternatively, anti-rotation elements 13 can be configured to engage a retaining portion of the second wings 43.

According to one embodiment, the perimetral wall 12 comprises a retaining aperture 13a. Specifically, the retaining aperture 13a defines the anti-rotation elements 13. The retaining aperture 13a prevents the rotation of the fiber optical spool 40 when the fiber optical spool 40 is in the first position when it engages the retaining portion 45. The retaining aperture 13a disengages the retaining portion 45 upon the fiber optical spool 40 is moved in the second position.

The retaining portion 45 can extend from a first wing 42 along a retaining direction angled with A-A respect a radial direction R-R. It is to be noted that the retaining portion 45 extends outwardly with respect the fictitious outer circumference.

According to one embodiment, the adapter housing 50 is formed on the retaining portion 45.

The fiber optical storage equipment 1 comprises a longitudinal locking and rotational arrangement 60 for longitudinally locking the fiber optical spool 40 in the second position at the end support portion 31 and for allowing rotation of the fiber optical spool 40 around the support shaft 30.

According to one embodiment, the longitudinal locking and rotational arrangement 60 is also configured to allow the removal of the fiber optical spool 40 after locking.

According to one embodiment, the longitudinal locking and rotational arrangement 60 can also lock the fiber optical spool 40 in the first position.

According to one embodiment, the longitudinal locking and rotational arrangement 60 comprises a shaft locking member 61, a spool locking member 62 and a spool engagement member 63 configured to lock the fiber optical spool 40. The shaft locking member 61, the spool locking member 62 and the spool engagement member 63 also allow the removal of the fiber optical spool 40 from the support shaft 30.

The shaft locking member 61 is formed on the support shaft 30 at the end support portion 31.

The spool locking member 62 is formed on the fiber optical spool 40 and is resiliently deformable to engage and disengage the support shaft 30.

The spool engagement member 63 is formed on the spool locking member 62 and is configured to engage therebetween the shaft locking member 61 at the second position to lock the fiber optical spool 40 in the second position for rotating the fiber optical spool 40.

The spool engagement member 63 can also allow disengagement of the fiber optical spool 40 from the support shaft 30 upon application of an external force on the spool locking member 62.

According to one embodiment, the external force can be applied by an operator thorough a rotation tool.

According to one embodiment, the longitudinal locking and rotational arrangement 60 comprises a deformation frame 80 connected to at least one part of the spool locking member 62.

Namely, the deformation frame 80 is configured to inwardly deform the at least one part of the spool locking member 62 for disengagement of the spool engagement member 63 from the shaft locking member 61 upon actuation of the deformation frame 80 by the external force.

In detail, the external force actuates the deformation frame 80 which spaces apart the at least one part of the spool locking member 62 from the shaft locking member 61 inwardly in the hub channel 44 for the disengagement of the spool engagement member 63 from the shaft locking member 61.

According to one embodiment, the shaft locking member 61 is formed on the support shaft 30 within the hollow shaft channel 32. The spool locking member 62 extends into the hub channel 44 and is spaced apart from the hub 41 along a spacing direction Y-Y perpendicular to the longitudinal direction X-X. The spool locking member 62 defines with the hub 41 an annular gap 46 configured to receive therebetween the support shaft 30.

According to one embodiment, the shaft locking member 61 comprises a flange 61a inwardly projecting in the hollow shaft channel 32 at the end shaft portion 31. The spool engagement member 63 is configured to engage the flange 61a.

According to one embodiment, the spool locking member 62 comprises first and second locking fingers 90, 91 extending along the longitudinal direction X-X between respectively a first and second connection end portions 90a, 91a connected to the hub 41 at the second hub end portion 44b and an opposed first and second free retention end portions 90b, 91b. The spool engagement member 63 comprises first engagement elements 92 and second engagement elements 93 outwardly projecting respectively from the first and second first locking fingers 90, 91.

The first and second engagement elements 92, 93 are arranged respectively at a first and second distance from the second hub end portion 44b. The first distance being greater than the second distance. **In** this way, the first and second engagement elements 92, 93 are configured to receive and lock the shaft locking member 61.

Namely, the first and second engagement elements 92, 93 define therebetween a receiving area 94 to engage the shaft locking member 61 to lock the fiber optical spool 40 at the end shaft portion 31 and to allow the relative rotation.

According to one embodiment, the first and the second engagement elements 92, 93 outwardly project respectively at the first and second free retention end portions 90b, 91b towards the shaft 30. It is worth noting that the first locking fingers 90 and the second locking fingers 91 respectively extend from the second hub end portion 44b for a first length and a second length wherein the first and second free retention end portions 90b, 91b are respectively at the first and second distance.

According to one embodiment, the first and second locking fingers 90, 91 are angularly spaced apart in an alternated manner. Namely, each first locking finger 90 is arranged between two second locking fingers 91 and vice versa each second locking finger 91 is arranged between two first locking fingers 90.

According to one embodiment, the first locking fingers 90 and the second locking fingers 91 are resiliently deformable. A deformation of the first and second locking fingers 90, 91 can be carried out with respect to the first and second connection end portions 90a, 91a.

The first locking fingers 90 are resiliently deformable for allowing disengagement of the first engagement elements 92 from the shaft locking member 61 for removal of the fiber optical spool 40.

The second locking fingers 91 are resilient deformable for allowing the engagement of the shaft locking member 61 between the first and second engagement elements 92, 93. Namely, the second locking fingers 91 inwardly deform in the passage of the fiber optical spool 40 pass from the first to the second position and resiliently deform back upon the fiber optical spool 40 reaches the second position. For simplify such aim, the second engagement member 93 can be rounded or chamfered to step over the shaft locking member 61.

According to one embodiment, the flange 61a has a locking surface 66 configured to engage the first engagement elements 92 and an opposed support surface 67 configured to engage the second engagement elements 93.

In the second position, the engagement elements 92 and the second engagement elements 93 abut against the flange 61a to lock the fiber optical spool 40 and allow the rotation of the hub 41.

According to one embodiment, the second engagement elements 93 have friction members 97 configured to counteract a rotation of the fiber optical spool 40 engaging the shaft locking member 61. As shown, the friction members 97 can be triangularly shaped elements which can partially fill recesses formed on the shaft locking member 61, between locking surface 66 and the opposed support surface 67 from the support surface 67. During the rotation of the fiber optical spool 40, the triangular friction members 97 engage the recesses on the shaft locking member 61 one after the other, reducing the rotation speed and avoiding free movement in absence of a rotational force applied on the fiber optical spool 40.

According to one embodiment, the deformation frame 80 is arranged in the hub channel 44 and connected to the first locking fingers 90. It is to be noted that the deformation frame 80 is configured to inwardly deform the first locking fingers 90 for disengagement of the first locking elements 92 from the shaft locking member 61 upon actuation of the deformation frame 80 by the external force.

Namely, the external force actuates the deformation frame 80 which space apart the first locking elements 92 from the shaft locking member 61 inwardly in the hub channel 44. In this way, the first engagement elements 93 are spaced apart from the shaft locking member 61 for removal of the fiber optical spool 40 from the shaft 30.

According to one embodiment, the deformation frame 80 comprises a rotating body 81 and connecting arms 82 configured to connect the rotating body 81 to the first locking fingers 90 proximate to the first free retention end portions 90b. Namely, the connecting arms 82 are configured to connect the rotating body 81 to the first locking fingers 90 at to the first free retention end portions 90b.

The rotating body 81 can be arranged along the hub channel 44 proximate the first hub end portion 44a.

In detail, the rotating body 81 is configured to rotate around a rotating axis C-C extending along the longitudinal direction X-X upon application of an external force to inwardly deform the first locking fingers 90. The rotating body 81 can be actuated by an operator using a rotating tool.

According to one embodiment, the rotating body 81 has a tool seat 81a configured to receive the rotation tool. The tool seat 81a can have different shapes as a function of the type of rotation tool. The rotation tool can be, for example, a screwdriver.

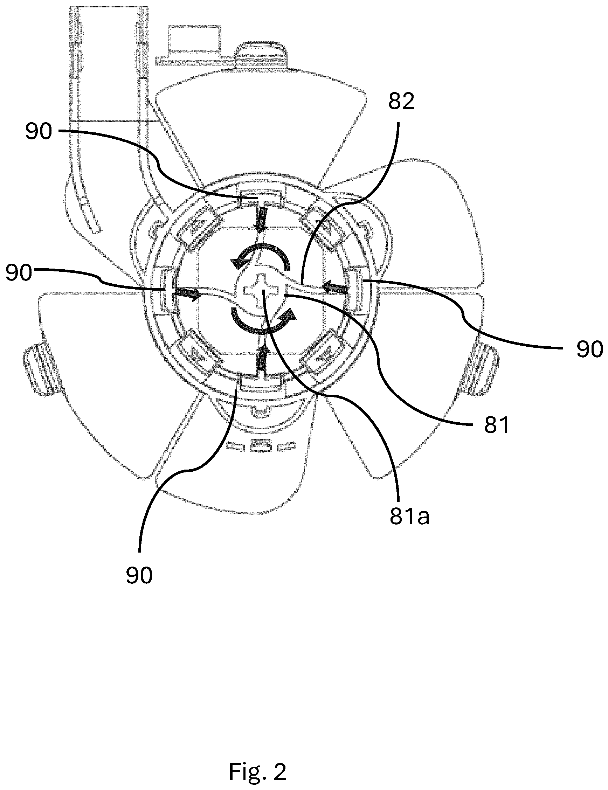

According to the embodiment shown in figure 2, the rotating body 81 is configured to rotate about the rotating axis C-C as indicated with the curved arrows.

According to one embodiment, the connecting arms 82 are angularly spaced apart at the rotating body 81 such that the rotation of the rotating body 81 causes a simultaneous deformation of the first looking fingers 90.

According to one embodiment, each connecting arm 82 extends between the relative first locking finger 90 and the rotating body 81 along a curved direction. Such curved direction simplifies the rotation of the rotating body 81 and then the deformation of the looking fingers 90. It is to ben noted that the each connecting arm 82 can be resiliently deformable.

In detail, the rotation of the rotating body 81 pulls one end of the connecting arms 82 connected to the rotating body 81 along directions tangential to the rotating body 81 while the other end of the connecting arms 82 connected the first locking finger 90 acts on the first locking finger 90 to pull it upon application the external force. In this way, the deformation frame 80 inwardly deforms the first locking fingers 90 as shown with arrows in figure 2 towards the rotating body 81.

According to one embodiment, the deformation frame 80 is made in one piece with the oplical fiber spool 40.

The hub 41 can comprises a retention portion 41a inwardly projecting in the hub channel 44 from which the first and second locking finger 90, 91 protrude.

Thanks to the longitudinal locking and rotational arrangement 60 with the fingers extending from the hub, the fiber optical storage equipment 1 is simplified and the removal of the fiber otpical spool 40 from the support shaft 30 is simplified as well.

According to one embodiment, the longitudinal locking and rotational arrangement 60 further comprises first and second locking member 64, 65 which prevent undesired longitudinal sliding of the fiber optical spool 40. The first locking member 64 outwardly projects from the hub 41 at the first hub end portion 44a. The second locking member 65 projects from the base 11 and is configured to engage the first locking member 64 when the fiber optical spool 40 is in the first position to prevent longitudinal sliding of the fiber optical spool 40.

According to one embodiment, the first locking member 64 comprises hub teeth 64a angularly spaced apart and the second locking member 65 comprises base teeth 65a angularly spaced apart and configured to engage the hub teeth 64a. The hub teeth 64a and/or the base teeth 65a are elastically deformable to mutually engage and disengage upon application of insertion and extraction force to the fiber optical spool 40. It is to be noted that the insertion force is applied to the fiber optical spool 40 along the longitudinal direction when it moves from the second to the first position. The extraction force instead is applied to the fiber optical spool 40 along the longitudinal direction X-X when it moves from the first to the second position.

According to one embodiment, fiber optical storage equipment 1, namely base member 10, comprises locking elements 96. The restraining elements 70 are configured to engage the locking elements 96 in restraining configuration and to disengage the locking elements 96 in the rotation configuration. Such locking elements 96 can protrude from the base 11.

According to one embodiment wherein the base module 10 comprises a perimeter wall 12, the perimetral wall 12 has an inner surface 12a and an outer surface 12b. The locking elements 96 are formed on the outer surface 12b of the perimetral wall 12.

Specifically, each locking element 96 can protrude from the outer surface 12b and comprises a first coupling element 96a. The restraining elements 70 can comprise a second coupling element 72 configured to engage the first coupling element 96a in the restraining configuration. In detail, the first coupling element 96a can comprise a protrusion and the second coupling element 72 can comprise a seat configured to reversibly engage the protrusion.

According to one embodiment, a restraining element 70 comprises a connector housing 71 for retaining an optical connector 4. Namely, the connector housing 71 protrudes from the restraining element 70 at the coupling portion 70b. The connector housing 71 can extend between connector openings 71a defined by a connector base 71b and connector walls 71c projecting from the base 71b and elastically deformable to receive and retain the optical connector 4.

Thanks to the presence of the connector housing 71 on the restraining element 70 the height of the spool, of the support shaft, eventually of the cover member, and an overall height is limited and/or reduced compared to the solution with the connector in the top.

According to one embodiment, the base module 10 comprises cable retaining members 16 configured to retain the optical cable 2.

According to an alternative embodiment, the perimetral wall 12 has one or more cable openings 15 for receiving an optical cable 2. Such cable openings 15 are angularly spaced apart and are configured to allow and to regulate an extraction length of the optical cable 2. The base module 10 comprises cable retaining members 16 externally to the perimetral wall 12 to retain the optical cable 2 passing through one of the cable openings 15. Such cable retaining members 16 are configured to fix the extraction length of the optical cable.

When the cover member is provided, the cover member has first openings at the cable retaining members 16 for receiving the optical cable 2 passing through the cable openings 15. The cover member has a second opening at the adapter housing 50 for receiving an optical connector to be inserted in the optical adapter 3.

The present invention further relates to a fiber optical storage equipment assembly 100.

The fiber optical storage equipment assembly 100 comprises the fiber optical storage equipment 1. The fiber optical storage equipment assembly 100 further comprises the optical adapter 3 arranged in the adapter housing 50 and an optical cable 2 to be wound and unwound. The optical cable 2 has at one end portion, a connector to be connected to the optical adapter 3 and, at the other end portion, an optical connector 4 to be connected to a termination box.

## Claims

1. A fiber optical storage equipment (1) comprising:
- a base member (10) comprising a base (11);
- a support shaft (30) extending along a longitudinal direction (X-X) perpendicular to the base (11) between the base member (10) and an end support portion (31);
- an optical fiber spool (40) for winding and unwinding an optical cable (2), the optical fiber spool (40) being configured to longitudinally move along the support shaft (30) and to rotate around the support shaft (30), the optical fiber spool (40) being movable along the longitudinal direction (X-X) between a first position, where the optical fiber spool (40) is proximate to the base (11) and a second position, where the optical fiber spool (40) is longitudinally spaced apart from the base (11), the optical fiber spool (40) being free to rotate for winding and unwinding in the second position,
wherein the fiber optical storage equipment (1) comprises:
- a longitudinal locking and rotational arrangement (60) for longitudinally locking the fiber optical spool (40) in the second position at the end support portion (31) and for allowing rotation of the fiber optical spool (40) around the support shaft (30).

2. The fiber optical storage equipment (1) according to claim 1, wherein the longitudinal locking and rotational arrangement (60) comprises:
- a shaft locking member (61) formed on the support shaft (30) at the end support portion (31);
- a spool locking member (62) formed on the fiber optical spool (40) and resiliently deformable to engage and disengage the support shaft (30);
- a spool engagement member (63) formed on the spool locking member (62) and configured to engage therebetween the shaft locking member (61) at the second position to lock the fiber optical spool (40) in the second position for rotating the fiber optical spool (40) and to allow disengagement of the fiber optical spool (40) from the support shaft (30) upon application of an external force on the spool locking member (62).

3. The fiber optical storage equipment (1) according to claim 2, wherein the longitudinal locking and rotational arrangement (60) comprises a deformation frame (80) connected to at least one part of the spool locking member (62), the deformation frame (80) being configured to inwardly deform the at least one part of the spool locking member (62) for disengagement of the spool engagement member (63) from the shaft locking member (61) upon actuation of the deformation frame (80) by the external force.

4. The fiber optical storage equipment (1) according to claim 3, wherein
- the optical fiber spool (40) comprises:
- a hub (41) comprising a hollow hub channel (44) extending along the longitudinal direction (X-X) from a first hub end portion (44a) arranged at the base (11) in the first position to an opposite second hub end portion (44b) and configured to receive the support shaft (30);
- the support shaft (30) comprises a hollow shaft channel (32).

5. The fiber optical storage equipment (1) according to claim 4, wherein
- the shaft locking member (61) is formed on the support shaft (30) within the hollow shaft channel (32);
- the spool locking member (62) extends into the hub channel (44) and is spaced apart from the hub (41) along a spacing direction (Y-Y) perpendicular to the longitudinal direction (X-X), the spool locking member (62) defining with the hub (41) an annular gap (46) configured to receive therebetween the support shaft (30).

6. The fiber optical storage equipment (1) according to claim 4 or 5, wherein:
- the spool locking member (62) comprises first and second locking fingers (90, 91) extending along the longitudinal direction (X-X) between respectively a first and second connection end portions (90a, 91a) connected to the hub (41) at the second hub end portion (44b) and an opposed first and second free retention end portions (90b, 91b);
- the spool engagement member (63) comprises first engagement elements (92) and second engagement elements (93) outwardly projecting respectively from the first and second first locking fingers (90, 91),
- the first and second engagement elements (92, 93) being arranged respectively at the first and second distance from the second hub end portion (44b), the first distance being greater than the second distance.

7. The fiber optical storage equipment (1) according to claim 6, wherein the first and the second engagement elements (92, 93) outwardly project respectively at the first and second free retention end portions (90b, 91b) towards the shaft (30).

8. The fiber optical storage equipment (1) according to any claims 6 to 7, wherein
- the first locking fingers (90) are resiliently deformable for allowing disengagement of the first engagement elements (92) from the shaft locking member (61) for removal of the fiber optical spool (40);
- the second locking fingers (91) are resilient deformable for allowing the engagement of the shaft locking member (61) between the first and second engagement elements (92, 93).

9. The fiber optical storage equipment (1) according to any claims 6 to 8, wherein
- the shaft locking member (61) comprises a flange (61a), the flange (61a) having a locking surface (66) configured to engage the first engagement elements (92) and an opposed support surface (67) configured to engage the second engagement elements (93).

10. The fiber optical storage equipment (1) according to any claims 6 to 9, wherein
- the first and second engagement elements (92, 93) define therebetween a receiving area (94) to engage the shaft locking member (61) to lock the fiber optical spool (40) at the end shaft portion (31) and to allow the relative rotation.

11. The fiber optical storage equipment (1) according to any claims 6 to 10, wherein the second engagement elements (93) have friction members (97) configured to counteract a rotation of the fiber optical spool (40) engaging the shaft locking member (61).

12. The fiber optical storage equipment (1) according to claim any claims 6 to 11, wherein the deformation frame (80) is arranged in the hub channel (44) and connected to the first locking fingers (90), the deformation frame (80) being configured to inwardly deform the first locking fingers (90) for disengagement of the first locking elements (92) from the shaft locking member (61) upon actuation of the deformation frame (80) by the external force.

13. The fiber optical storage equipment (1) according to claim 12, wherein the deformation frame (80) comprises a rotating body (81) and connecting arms (82) configured to connect the rotating body (81) to the first locking fingers (90) at the first free retention end portions (90b), the rotating body (81) being configured to rotate around a rotating axis (C-C) extending along the longitudinal direction (X-X) upon application of an external force to inwardly deform the first locking fingers (90).

14. The fiber optical storage equipment (1) according to claim 13, wherein each connecting arm (82) extends between the relative first locking finger (90) and the rotating body (81) along a curved direction.

15. A fiber optical storage equipment assembly (100) comprising:
- a fiber optical storage equipment (1) according to any claims 1 to 14;
- an optical adapter (3) arranged in an adapter housing (50);
- an optical cable (2) having at one end portion, a connector to be connected to the optical adapter (3) and, at the other end portion, an optical connector (4) to be connected to a termination box.
